# EUROPEAN PATENT SPECIFICATION

(11) **EP 4 485 301 B1**
(45) Date of publication and mention of the grant of the patent: **13.05.2026**
(21) Application number: 24184451.3
(22) Date of filing: 25.06.2024
(51) Int. Cl.: G06Q 10/04, G06Q 10/10, G06Q 40/02, G06Q 40/06, G06Q 50/10

(54) **METHOD FOR PROFILING EMOTIONAL TYPES**
VERFAHREN ZUR ERSTELLUNG VON EMOTIONALEN MUSTERN
PROCÉDÉ DE PROFILAGE DE TYPES ÉMOTIONNELS

(30) Priority: 26.06.2023 IT 202300013182
(43) Date of publication of application: 01.01.2025
(73) Proprietor: Intesa Sanpaolo Innovation Center S.p.A., 10138 Torino (TO) (IT); Intesa Sanpaolo S.p.A., 10121 Torino (TO) (IT)
(72) Inventor: Cecchetti, Luca, Torino TO (IT); Handjaras, Giacomo, Torino TO (IT); Roversi, Raffaella, Torino TO (IT); Brizio, Matteo, Torino TO (IT); Monferrato, Carla, Torino TO (IT); Maggi, Francesca, Torino TO (IT)
(74) Representative: Perani & Partners S.p.A.

(56) References cited:
- US-A1- 2011 270 780
- SALMAN MOUSAEIRAD: "Intelligent Vector-based Customer Segmentation in the Banking Industry", ARXIV.ORG, CORNELL UNIVERSITY LIBRARY, 201 OLIN LIBRARY CORNELL UNIVERSITY ITHACA, NY 14853, 22 December 2020 (2020-12-22), XP081844097
- MAHMOUD SALAHELDIN KASEM ET AL: "Customer Profiling, Segmentation, and Sales Prediction using AI in Direct Marketing", ARXIV.ORG, CORNELL UNIVERSITY LIBRARY, 201 OLIN LIBRARY CORNELL UNIVERSITY ITHACA, NY 14853, 3 February 2023 (2023-02-03), XP091433687

## Description

### SCOPE OF APPLICATION

The present invention relates to a method for profiling users in clusters related to distinct emotional types. This method finds particular application in customer management, for example in a banking context.

### Description of the prior art

In the state of the art, methods for classifying users on the basis of the personality or behaviours of the individual user are known. In particular, these methods involve the application of multi-dimensional models, i.e. models built according to a multitude of factors related to the common behaviours adopted by the users to be classified.

By way of example, known methods provide for the acquisition of data relative to users, for example through self-assessments, based on the perception that users have of themselves, their personality or their behaviours.

An example of a method for segmenting customers based on common characteristics in banking is shown in the document "Salman Mousaeirad: Intelligent Vector-based Costumer Segmentation in the Banking Industry, Arxiv.org, Cornell University Library". A further example of a method for customer segmentation is shown in the document "Mahmoud Salaheldin Kasem et. Al.: Costumer Profiling, Segmentation, and Sales Prediction using AI in Direct Marketing, Arxiv.org, Cornell University Library", in which the aforementioned method allows certain customer actions to be predicted in order to increase sales performance.

US 2011/270780 A1 instead shows a method for the identification of a user's financial personality and for the construction of a respective risk profile. The publication : "Intelligent Vector-based Customer Segmentation in the Banking Industry", ARXIV.ORG, CORNELL UNIVERSITY LIBRARY, 201 OLIN LIBRARY CORNELL UNIVERSITY ITHACA, NY 14853, 22 December 2020, refers to Customer Segmentation is the process of dividing customers into groups based on common characteristics. The publication "Customer Profiling, Segmentation, and Sales Prediction using AI in Direct Marketing", ARXIV.ORG, CORNELL UNIVERSITY LIBRARY, 201 OLIN LIBRARY CORNELL

UNIVERSITY ITHACA, NY 14853, 3 February 2023, refers to the creation of a customer profile and forecast for the sale of goods.

### Problem of the prior art

In the prior art, however, data collected on the basis of users' self-assessments and self-perceptions are of a qualitative nature; therefore, they are difficult to correlate and use in a customer management context. By way of example, in a banking context, it is difficult to correlate the personal data collected relative to the behaviour of a user to the banking dynamics of that user.

In addition, in order to classify users into different groups, it is necessary to acquire and process this kind of specific personal data. In fact, the known methods are based on the use of data collected for the individual user, making the acquisition operation and the consequent processing of the data difficult, as well as requiring a high computational cost.

Consequently, profiling into emotional types is poorly applicable in the management of a large number of customers, for example, in a banking context.

### SUMMARY OF THE INVENTION

The object of the invention in question is to obtain a method for profiling the emotional type of one or more users in order to be able to overcome the drawbacks of the prior art.

The object of the invention in question is to provide a method for profiling the emotional type of one or more users that allows predicting the emotional type of one or more users quickly and efficiently.

**In** particular, the object of the invention in question is to provide a method for profiling the emotional type of one or more users which allows the computational cost and the time required for the profiling of the users to be decreased.

The technical task specified, and the purposes specified are substantially achieved by a method for profiling the emotional type of one or more users comprising the steps set forth in one or more of the claims set forth herein.

### Advantages of the invention

By means of one embodiment, it is possible to obtain a method for profiling the emotional type of one or more users that allows users to be classified according to specific indicators relative to quantitative data of the context in which the method is used. In particular, the method involves using an optimized algorithm to determine an optimal number of clusters, representative of the distinct emotional types of users, and classifying users into their respective clusters.

Advantageously, the method of the present invention allows user profiling to be extended to the full range of users of the context in which the method is embedded, without the need to acquire personal data from each user. In this way, it is possible to save time and resources and decrease the required computational cost.

Still advantageously, the method of the present invention allows the experience of the individual user to be customized. In fact, the method allows the selection of a small group of users and effectively transmitting targeted information to the selected group of users.

### BRIEF DESCRIPTION OF THE DRA WINGS

The features and advantages of the present invention will become apparent from the following detailed description of a possible practical embodiment thereof, illustrated by way of non-limiting example in the accompanying drawings, in which:

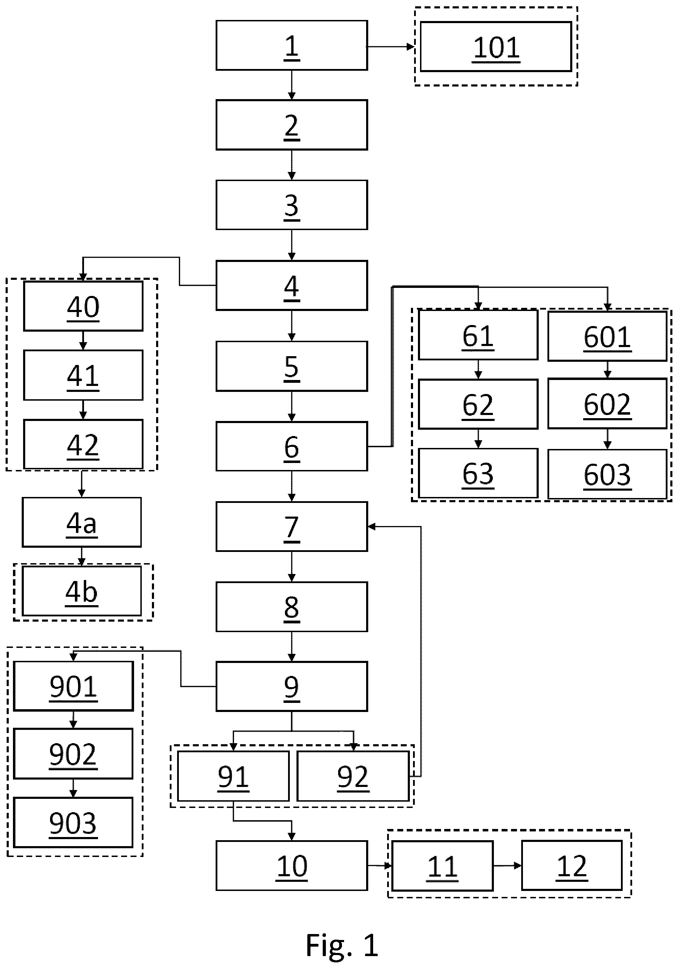

- Figure 1 is a schematic representation of the order of the steps of the method.

### DETAILED DESCRIPTION

The present invention relates to a method for profiling the emotional type, or emotype, of one or more users, the steps of which are shown schematically in Figure 1.

Within the scope of the present invention, emotional type means the union of a user's emotional traits and personality traits. In particular, the classification of emotional types can refer, by way of example, to the character traits, attitudes and personality of the user. Possibly, in a banking context, for example, the emotional type may also comprise traits of a user related to their approach to expenses and economic management.

In the following description, reference will be made to customer profiling in an exemplary banking context, without excluding the application of the method of the present invention to different contexts.

The method of the present invention comprises the step of providing 1 a database containing a first series of data relative to a plurality of users and a plurality of indicators associated with the first series of data. Preferably, the plurality of users is defined by at least some of the customers of a banking institution. More preferably, the plurality of users is defined by all customers of a banking institution.

The first series of data comprises a respective dataset for each user. In particular, all the datasets associated with the respective users are represented by the same indicators.

According to the preferred aspect of the invention, the first series of data comprises quantitative data relative to the respective banking behaviour of the plurality of users and/or the money management attitude. As a result, the indicators represent dichotomous variables of interest representative of a particular banking behaviour and/or spending preference. Preferably, the indicators comprise at least dichotomous variables relative, by way of example, to the possession of a credit card, the use of cheques, the purchase of travel or means of transport. Optionally, the indicators comprise numerical variables relative, by way of example, to the liquidity on the user's account or the length of relationship between the user and the banking institution.

The method thus comprises the step of providing 2 a processing unit in signal communication with the database. The processing unit is configured to store, analyse and process each dataset of the first series of data.

Preferably, the processing unit comprises a PC or a server, optionally connected to the internet, able to perform data processing processes according to predefined algorithms.

The method thus comprises the step of selecting 3 a sample of users from the plurality of users. Preferably, the sample of users is selected randomly. More preferably, the sample of users is subsequently analysed to evaluate its representativeness with respect to the plurality of users, i.e. the entire customer population, in order to have an adequate distribution of users between gender, age and/or economic conditions.

The method thus comprises the step of acquiring 4 a second series of data, which comprises a respective set of qualitative data for each user of the sample of users. The second series of data is collected by at least one data entry form.

The step of acquiring 4 the second series of data comprises the sub-step of storing 4a the second series of data in the processing unit. Preferably, the step of acquiring 4 the second series of data comprises the further sub-step of associating 4b, by means of the processing unit, the respective set of qualitative data of each user of the sample of users with the respective series of data of the first series of data of the same user. In other words, it is therefore possible to associate the personal data of a user acquired using the data acquisition form with the bank details of the same user.

Preferably, the second series of data comprises qualitative data relative to one or more of purchasing and/or investment preferences, financial lifestyle, source of income, aptitude, personality, future prospects, economic self-assessment.

The method thus comprises the step of providing 5 a partitioning algorithm resident in the processing unit.

The method comprises the step of profiling 6 the users of the sample of users by means of the partitioning algorithm.

The step of profiling 6 comprises the sub-step of training 61 the partitioning algorithm on the second series of data for each set of qualitative data of each user.

The profiling step 6 also involves defining 62 an optimal number of clusters by means of the partitioning algorithm, in which each cluster is related to a distinct emotional type.

The step of profiling 6 thus comprises the step of classifying 63, by means of the partitioning algorithm, the users from the sample of users by assigning each user to a cluster of the optimal number of clusters on the basis of the respective set of qualitative data of the second series of data.

The method thus comprises the step of providing 7 a classification algorithm resident in the processing unit.

The method comprises the step of profiling 8 the users of the sample of users by means of the classification algorithm by classifying each user into a cluster of the optimal number of clusters on the basis of the indicators representing the respective set of data of the first series of data.

The method thus comprises the step of evaluating 9 the classification algorithm as a function of a comparison between the user sample profiling obtained by means of the classification algorithm and the user sample profiling obtained by means of the respective partitioning algorithm.

The step of evaluating 9 involves validating 91 the classification algorithm when there is compatibility in the comparison of said profilings, otherwise, when there is no compatibility in the comparison of said profilings, the step of evaluating 9 involves repeating 92 the steps of providing 7 a classification algorithm, by providing a different classification algorithm resident in the processing unit, profiling 8 the users of the user sample and evaluating 9 the classification algorithm provided.

It should be noted that, contrary to the aforementioned prior art, the present method involves identifying a classification algorithm for user profiling that is simple to use, and validating the results obtained with this algorithm on the basis of the results obtained by means of a different algorithm that has already been tested to be reliable, which, however, requires personal information that is difficult to find. In this way, it is possible to profile a large number of users with a simple and effective algorithm that nevertheless guarantees optimal profiling, as better detailed in the following description.

The method thus comprises the step of profiling 10 each user of the plurality of users by means of the classification algorithm by assigning each user to a cluster of the optimal number of clusters, providing in input to the classification algorithm the indicators representing the respective set of data of the first series of data, to define the emotional type of each user.

Preferably, the step of profiling 10 each user of the plurality of users involves profiling only the users not belonging to the user sample, i.e. the users for which the second series of data has not been acquired. In this way it is possible to avoid profiling the users of the sample of previously classified users, in order to reduce the computational cost, and therefore the overall economic cost.

It should be noted that the method of the present invention thus allows profiling each user of the plurality of users, i.e. the customers of a banking institution, starting from the qualitative data acquired for a small sample of users. In this way, it is therefore possible to classify users without acquiring the subjective personal information, i.e., relative to own character traits, for each user, which is advantageous in terms of time and computational and economic cost necessary to process the acquired qualitative data.

According to the preferred embodiment of the invention, the step of providing 1 a database comprises the sub-step of selecting 101 an optimal number of indicators among the plurality of indicators associated with the first series of data. Preferably, the optimal number of indicators is comprised between 40 and 60. More preferably, the optimal number of indicators is 50.

In accordance with the preferred embodiment of the invention, the step of acquiring 4 a second series of data comprises the sub-step of providing 40 a data entry form to each user of the sample of users. In detail, the data entry form can be fillable in by the user. Preferably, the data entry form can be filled in digitally, by means of a computer or any electronic device. Alternatively, the data entry form is of a paper type and is fillable in by hand by the user.

Preferably, the step of acquiring 4 comprises the additional sub-step of receiving 41 the data entry form filled in by each user in the user sample.

Still preferably, the step of acquiring 4 comprises the sub-step of storing 42 data relative to the data entry form in the processing unit. In detail, each data entry form comprises data defining the respective qualitative data set of the second series of data.

According to the preferred aspect of the invention, the data entry form comprises at least one section, fillable in by the user, having one or more questions relative to one or more of: the user's relationship to money in purchases, the user's main source of income, the ownership of one or more homes, the user's lifestyle, purchasing and/or investment preferences. Preferably, the user may fill in said form by answering the questions by choosing one of a plurality of options.

According to the same aspect, the data entry form comprises a further section, fillable in by the user, having one or more questions relative to one or more of: the user's attitude and the user's personality. Preferably, the user can fill in this form by answering the questions by entering a preference value comprised between, for example, -10 and +10.

Still according to the same aspect, the data entry form comprises a further section, fillable in by the user, having one or more questions relative to one or more of the user's ambitions or expectations for the future, needs and spending preferences. Preferably, the user can answer the questions by selecting one or a multiple of multiple available options.

According to the preferred embodiment of the invention, the step of acquiring 4 a second series of data comprises the sub-step of validating the stability over time of the user responses to the data entry form. This sub-step involves providing the same data entry form again to each user of the user sample after an extended time interval. Preferably, the extended time interval has a duration in the order of magnitude of months, for example five months.

The validating sub-step also involves measuring the consistency of the responses by correlating the respective responses of each user to the data entry form at a distance of the extended time interval.

In this way, it is possible to interpret the user responses, and thus the data of the second series of data, as a measure of personality traits and not of the user's status at the time of the response to the data entry form.

In accordance with the preferred embodiment of the invention, the step of providing 5 a partitioning algorithm comprises the sub-step of providing a plurality of partitioning algorithms resident in the processing unit. Preferably, said sub-step involves providing three distinct partitioning algorithms.

According to the same embodiment, the step of profiling 6 the users of the user sample by means of the partitioning algorithm comprises the sub-step of training 601 each partitioning algorithm on the second series of data for each set of qualitative data of each user.

Preferably, the profiling step 6 involves defining 602 for each partitioning algorithm an optimal number of clusters. Note that the optimal number of clusters is defined according to the partitioning algorithm used and, therefore, may be different depending on the algorithm used.

Always preferably, for each partitioning algorithm, the step of profiling 6 involves classifying 603 the sample of users by means of the respective partitioning algorithm by assigning each user of the sample of users to a cluster of the respective optimal number of clusters based on the respective set of qualitative data of the second series of data.

According to the same preferred aspect of the invention, the step of evaluating 9 involves evaluating 901, for each partitioning algorithm, the classification algorithm as a function of a comparison between the user sample profiling obtained by means of the classification algorithm and the user sample profiling obtained by means of the respective partitioning algorithm.

Preferably, the step of evaluating 9 therefore involves comparing 902 the partitioning algorithms on the basis of compatibility with these profilings.

Still preferably, the step of evaluating 9 involves identifying 903 the optimal partitioning algorithm as a function of the greater compatibility that emerged from the comparison made in the previous sub-step.

It should be noted that, for each partitioning algorithm used, the step of evaluating 9 involves validating the classification algorithm. In this way, the identification of the optimal partitioning algorithm takes place as a function of the compatibility between the partitioning algorithm and the classification algorithm, for each partitioning algorithm and for each classification algorithm.

Preferably, the partitioning algorithm is of the unsupervised type and/or comprising one of K-means, Spectral Clustering and t distributed Stochastic Neighbour Embedding.

According to the preferred aspect of the invention, the optimal partitioning algorithm is of the K-means type.

It should be noted that the partitioning algorithm makes it possible to identify an optimal number of clusters, representative of the different emotional types of users in the user sample, on the basis of the second series of data acquired. In this way, it is possible to identify the number and type of emotional types present among the sample and, consequently, among the users of the plurality of users, starting from the qualitative data acquired.

Preferably, the optimal number of clusters is comprised between 2 and 10, more preferably 5.

Still preferably, the dimensionality of the cluster space, i.e. the space of the characteristics and distinguishing features of the respective emotional types is defined by a dimension comprised between 1 and 4, more preferably 2. Note that the dimensionality of the cluster space derives from an analysis of the main components of the user responses of the user sample to the data entry form.

Even more preferably the distance relative to the partitioning algorithm is of the cosine or Euclidean type, more preferably Euclidean.

In more detail, the optimal number of clusters is equal to 5 when the partitioning algorithm is of the K-means type, the distance relative to the partitioning algorithm is of the Euclidean type and the dimensionality of the cluster space is equal to 2.

According to the preferred embodiment of the invention, the classification algorithm is of the supervised type and/or comprising one of K-Nearest Neighbors and Support-Vector Machine, preferably K-Nearest Neighbors.

According to one aspect of the invention, the method involves initializing an application, preferably a Python application, resident in the processing unit and capable of classifying the users of the plurality of users in a respective cluster by means of the classification algorithm. In this way, it is possible to automate the profiling operation of each user and reduce the overall computational cost.

In accordance with the preferred embodiment of the invention, the method comprises the further step of selecting 11 users belonging to one or more clusters of the optimal number of clusters.

Finally, the method comprises the step of transmitting 12 predetermined information only to the selected users.

It should be noted that the method of the present invention therefore allows the experience of each user to be personalized on the basis of their own emotional type. In this way, it is possible to transmit targeted information to users and/or create interaction interfaces between the banking institution and the customer, for example, that are personalised for the customer.

## Claims

1. Method for profiling the emotional type of one or more users, comprising the steps of:
- providing (1) a database containing a first series of data relative to a plurality of users and a plurality of indicators associated with the first series of data, the first series of data comprising for each user a respective set of data associated with the respective user, each set of data being represented by said indicators;
- providing (2) a processing unit in signal communication with the database, said processing unit being configured to analyse and process each set of data of the first series of data;
- selecting (3) a sample of users of the plurality of users;
- acquiring (4) a second series of data comprising a respective set of qualitative data for each user of the sample of users by means of at least one data entry form, the acquiring step (4) comprising the sub-step of storing (4a) the second series of data in the processing unit;
- providing (5) a partitioning algorithm resident in the processing unit;
- profiling (6) the users of the sample of users by means of the partitioning algorithm, the profiling step (6) comprising the following sub-steps:
- training (61) the partitioning algorithm on the second series of data for each set of qualitative data of each user,
- defining (62) an optimal number of clusters, each cluster being related to a different emotional type;
- classifying (63) by means of the partitioning algorithm the users of the sample of users by assigning each user to a cluster of the optimal number of clusters on the basis of the respective set of qualitative data of the second series of data;
- providing (7) a classification algorithm resident in the processing unit;
- profiling (8) the users of the sample of users by means of the classification algorithm by classifying each user into a cluster of the optimal number of clusters on the basis of the indicators representing the respective set of data of the first series of data;
- evaluating (9) the classification algorithm as function of a comparison between the profiling of the sample of users obtained by means of the classification algorithm and the profiling of the sample of users obtained by means of the partitioning algorithm, said evaluating step (9) comprising the sub-steps of validating (91) the classification algorithm when there is compatibility in the comparison of said profilings, or repeating (92) the steps of providing (7) a classification algorithm, providing a different classification algorithm, profiling (8) and evaluating (9) the classification algorithm when there is no compatibility in the comparison of said profilings;
- profiling (10) each user of the plurality of users by means of the classification algorithm by assigning each user to a cluster of the optimal number of clusters, providing in input to the classification algorithm the indicators representing the respective set of data of the first series of data, to define the emotional type of each user.

2. Method for profiling according to claim 1, wherein:
- the first series of data is related to the banking behaviour of the plurality of users and/or to the money management attitude, each indicator comprising a dichotomous variable representative of a particular banking behaviour and/or of a spending preference; and
- the second series of data comprises qualitative data relative to one or more of purchasing and/or investment preferences, financial lifestyle, source of income, aptitude, personality, future prospects, economic self-assessment.

3. Method for profiling according to claim 1 or 2, wherein:
- the step of providing (5) a partitioning algorithm comprises the sub-step of providing a plurality of partitioning algorithms;
- the step of profiling (6) the users of the sample of users by means of the partitioning algorithm comprises the sub-steps of:
- training (601) each partitioning algorithm on the second series of data for each set of qualitative data of each user;
- defining (602) for each partitioning algorithm an optimal number of clusters;
- for each partitioning algorithm, classifying (603) the sample of users by means of the respective partitioning algorithm by assigning each user of the sample of users to a cluster of the respective optimal number of clusters based on the respective set of qualitative data;
- the evaluating step (9) comprises the sub-steps of:
- for each partitioning algorithm, evaluating (901) the classification algorithm as a function of a comparison between the user sample profiling obtained by means of the classification algorithm and the user sample profiling obtained by means of the respective partitioning algorithm;
- comparing (902) the partitioning algorithms on the basis of the compatibility towards said profilings;
- identifying (903) the optimal partitioning algorithm as a function of the greater compatibility that emerged from the comparison made in the previous sub-step.

4. Method for profiling according to any one of the preceding claims, wherein the step of acquiring (4) a second series of data comprises the sub-steps of:
- providing (40) each user of the sample of users with the data entry form, the data entry form being fillable in by the user;
- receiving (41) the data entry form filled in by each user of the sample of users;
- storing (42) the data entry form in the processing unit, each data entry form comprising data defining the respective set of qualitative data of the second series of data, the processing unit being configured to analyse and process each set of qualitative data of the second series of data.

5. Method for profiling according to any one of the preceding claims, comprising the further steps of:
- selecting (11) users belonging to one or more clusters of the optimal number of clusters;
- transmitting (12) predefined information only to the selected users.

6. Method for profiling according to any one of the preceding claims, wherein the step of providing (1) a database comprises the sub-step of selecting (101) an optimal number of indicators among the plurality of indicators associated with the first series of data, the optimal number of indicators being comprised between 40 and 60, preferably equal to 50.

7. Method for profiling according to any one of claims 1 to 6, wherein the partitioning algorithm is of the unsupervised type and/or comprising one of K-means, Spectral Clustering and t distributed Stochastic Neighbour Embedding, preferably of the k-means type.

8. Method for profiling according to any one of claims 1 to 7, wherein:
- the dimensionality of the space of the clusters is defined by a dimension comprised between 1 and 4, preferably equal to 2; and/or
- the distance relative to the partitioning algorithm is of the cosine or Euclidean type, preferably Euclidean.

9. Method for profiling according to any one of the preceding claims, wherein the classification algorithm is of the supervised type and/or comprising one of K-Nearest Neighbors and Support-Vector Machine, preferably K-Nearest Neighbors.

10. Method for profiling according to any one of the preceding claims, wherein the optimal number of clusters is comprised between 2 and 10, preferably equal to 5.

## Patentansprüche

1. Verfahren zum Profilieren des emotionalen Typs eines oder mehrerer Benutzer, umfassend die folgenden Schritte:
- Bereitstellen (1) einer Datenbank, die eine erste Reihe von Daten bezüglich einer Vielzahl von Benutzern und eine Vielzahl von Indikatoren, die mit der ersten Reihe von Daten assoziiert sind, enthält, wobei die erste Reihe von Daten für jeden Benutzer einen jeweiligen Datensatz umfasst, der mit dem jeweiligen Benutzer assoziiert ist, wobei jeder Datensatz durch die besagten Indikatoren dargestellt wird;
- Bereitstellen (2) einer Verarbeitungseinheit in Signalkommunikation mit der Datenbank, wobei die besagte Verarbeitungseinheit konfiguriert ist, um jeden Datensatz der ersten Reihe von Daten zu analysieren und zu verarbeiten;
- Auswählen (3) einer Stichprobe von Benutzern aus der Vielzahl von Benutzern;
- Erfassen (4) einer zweiten Reihe von Daten, die einen jeweiligen Satz qualitativer Daten für jeden Benutzer der Stichprobe von Benutzern mittels mindestens eines Dateneingabeformulars umfasst, wobei der Erfassungsschritt (4) den Teilschritt des Speicherns (4a) der zweiten Reihe von Daten in der Verarbeitungseinheit umfasst;
- Bereitstellen (5) eines Partitionierungsalgorithmus, der in der Verarbeitungseinheit resident ist;
- Profilieren (6) der Benutzer der Stichprobe von Benutzern mittels des Partitionierungsalgorithmus, wobei der Profilierungsschritt (6) die folgenden Teilschritte umfasst:
- Trainieren (61) des Partitionierungsalgorithmus auf der zweiten Reihe von Daten für jeden Satz qualitativer Daten jedes Benutzers;
- Definieren (62) einer optimalen Anzahl von Clustern, wobei jeder Cluster auf einen unterschiedlichen emotionalen Typ bezogen ist;
- Klassifizieren (63) der Benutzer der Stichprobe von Benutzern mittels des Partitionierungsalgorithmus durch Zuweisen jedes Benutzers zu einem Cluster der optimalen Anzahl von Clustern auf der Grundlage des jeweiligen Satzes qualitativer Daten der zweiten Reihe von Daten;
- Bereitstellen (7) eines Klassifikationsalgorithmus, der in der Verarbeitungseinheit resident ist;
- Profilieren (8) der Benutzer der Stichprobe von Benutzern mittels des Klassifikationsalgorithmus durch Klassifizieren jedes Benutzers in einen Cluster der optimalen Anzahl von Clustern auf der Grundlage der Indikatoren, die den jeweiligen Datensatz der ersten Reihe von Daten darstellen;
- Evaluieren (9) des Klassifikationsalgorithmus als Funktion eines Vergleichs zwischen der Benutzerstichproben-Profilierung, die mittels des Klassifikationsalgorithmus erhalten wurde, und der Benutzerstichproben-Profilierung, die mittels des Partitionierungsalgorithmus erhalten wurde, wobei der besagte Evaluierungsschritt (9) die Teilschritte des Validierens (91) des Klassifikationsalgorithmus, wenn eine Kompatibilität im Vergleich der besagten Profilierungen besteht, oder des Wiederholens (92) der Schritte des Bereitstellens (7) eines Klassifikationsalgorithmus, des Bereitstellens eines anderen Klassifikationsalgorithmus, des Profilierens (8) und des Evaluierens (9) des Klassifikationsalgorithmus, wenn keine Kompatibilität im Vergleich der besagten Profilierungen besteht, umfasst;
- Profilieren (10) jedes Benutzers der Vielzahl von Benutzern mittels des Klassifikationsalgorithmus durch Zuweisen jedes Benutzers zu einem Cluster der optimalen Anzahl von Clustern, wobei dem Klassifikationsalgorithmus die Indikatoren, die den jeweiligen Datensatz der ersten Reihe von Daten darstellen, als Eingabe bereitgestellt werden, um den emotionalen Typ jedes Benutzers zu definieren.

2. Verfahren nach Anspruch 1, wobei:
- die erste Reihe von Daten auf das Bankverhalten der Vielzahl von Benutzern und/oder auf die Einstellung zur Geldverwaltung bezogen ist, wobei jeder Indikator eine dichotome Variable umfasst, die für ein bestimmtes Bankverhalten und/oder eine Ausgabenpräferenz repräsentativ ist; und
- die zweite Reihe von Daten qualitative Daten bezüglich eines oder mehrerer von Kauf- und/oder Investitionspräferenzen, finanziellem Lebensstil, Einkommensquelle, Eignung, Persönlichkeit, Zukunftsaussichten, wirtschaftlicher Selbsteinschätzung umfasst.

3. Verfahren nach Anspruch 1 oder 2, wobei:
- der Schritt des Bereitstellens (5) eines Partitionierungsalgorithmus den Teilschritt des Bereitstellens einer Vielzahl von Partitionierungsalgorithmen umfasst;
- der Schritt des Profilierens (6) der Benutzer der Stichprobe von Benutzern mittels des Partitionierungsalgorithmus die folgenden Teilschritte umfasst:
- Trainieren (601) jedes Partitionierungsalgorithmus auf der zweiten Reihe von Daten für jeden Satz qualitativer Daten jedes Benutzers;
- Definieren (602) für jeden Partitionierungsalgorithmus einer optimalen Anzahl von Clustern;
- für jeden Partitionierungsalgorithmus, Klassifizieren (603) der Stichprobe von Benutzern mittels des jeweiligen Partitionierungsalgorithmus durch Zuweisen jedes Benutzers der Stichprobe von Benutzern zu einem Cluster der jeweiligen optimalen Anzahl von Clustern auf der Grundlage des jeweiligen Satzes qualitativer Daten;
- der Evaluierungsschritt (9) die folgenden Teilschritte umfasst:
- für jeden Partitionierungsalgorithmus, Evaluieren (901) des Klassifikationsalgorithmus als Funktion eines Vergleichs zwischen der Benutzerstichproben-Profilierung, die mittels des Klassifikationsalgorithmus erhalten wurde, und der Benutzerstichproben-Profilierung, die mittels des jeweiligen Partitionierungsalgorithmus erhalten wurde;
- Vergleichen (902) der Partitionierungsalgorithmen auf der Grundlage der Kompatibilität gegenüber den besagten Profilierungen;
- Identifizieren (903) des optimalen Partitionierungsalgorithmus als Funktion der größeren Kompatibilität, die sich aus dem im vorhergehenden Teilschritt durchgeführten Vergleich ergab.

4. Verfahren nach einem der vorhergehenden Ansprüche, wobei der Schritt des Erfassens (4) einer zweiten Reihe von Daten die folgenden Teilschritte umfasst:
- Bereitstellen (40) des Dateneingabeformulars für jeden Benutzer der Stichprobe von Benutzern, wobei das Dateneingabeformular durch den Benutzer ausfüllbar ist;
- Empfangen (41) des von jedem Benutzer der Stichprobe von Benutzern ausgefüllten Dateneingabeformulars;
- Speichern (42) des Dateneingabeformulars in der Verarbeitungseinheit, wobei jedes Dateneingabeformular Daten umfasst, die den jeweiligen Satz qualitativer Daten der zweiten Reihe von Daten definieren, wobei die Verarbeitungseinheit konfiguriert ist, um jeden Satz qualitativer Daten der zweiten Reihe von Daten zu analysieren und zu verarbeiten.

5. Verfahren nach einem der vorhergehenden Ansprüche, umfassend die weiteren Schritte:
- Auswählen (11) von Benutzern, die zu einem oder mehreren Clustern der optimalen Anzahl von Clustern gehören;
- Übertragen (12) vordefinierter Informationen nur an die ausgewählten Benutzer.

6. Verfahren nach einem der vorhergehenden Ansprüche, wobei der Schritt des Bereitstellens (1) einer Datenbank den Teilschritt des Auswählens (101) einer optimalen Anzahl von Indikatoren aus der Vielzahl von Indikatoren, die mit der ersten Reihe von Daten assoziiert sind, umfasst, wobei die optimale Anzahl von Indikatoren zwischen 40 und 60 liegt, vorzugsweise gleich 50 ist.

7. Verfahren nach einem der Ansprüche 1 bis 6, wobei der Partitionierungsalgorithmus vom unüberwachten Typ ist und/oder eines von K-Means, spektralem Clustering und t-verteilter stochastischer Nachbareinbettung (t-distributed Stochastic Neighbour Embedding) umfasst, vorzugsweise vom K-Means-Typ ist.

8. Verfahren nach einem der Ansprüche 1 bis 7, wobei:
- die Dimensionalität des Raums der Cluster durch eine Dimension definiert ist, die zwischen 1 und 4 liegt, vorzugsweise gleich 2 ist; und/oder
- der Abstand relativ zum Partitionierungsalgorithmus vom Kosinus- oder euklidischen Typ ist, vorzugsweise euklidisch.

9. Verfahren nach einem der vorhergehenden Ansprüche, wobei der Klassifikationsalgorithmus vom überwachten Typ ist und/oder eines von K-Nächste-Nachbarn (K-Nearest Neighbors) und Support-Vektor-Maschine (Support-Vector Machine) umfasst, vorzugsweise K-Nächste-Nachbarn.

10. Verfahren nach einem der vorhergehenden Ansprüche, wobei die optimale Anzahl von Clustern zwischen 2 und 10 liegt, vorzugsweise gleich 5 ist.

## Revendications

1. Procédé de profilage du type émotionnel d'un ou plusieurs utilisateurs, comprenant les étapes consistant à :
- fournir (1) une base de données contenant une première série de données relatives à une pluralité d'utilisateurs et une pluralité d'indicateurs associés à la première série de données, la première série de données comprenant pour chaque utilisateur un ensemble respectif de données associé à l'utilisateur respectif, chaque ensemble de données étant représenté par lesdits indicateurs ;
- fournir (2) une unité de traitement en communication de signaux avec la base de données, ladite unité de traitement étant configurée pour analyser et traiter chaque ensemble de données de la première série de données ;
- sélectionner (3) un échantillon d'utilisateurs parmi la pluralité d'utilisateurs ;
- acquérir (4) une deuxième série de données comprenant un ensemble respectif de données qualitatives pour chaque utilisateur de l'échantillon d'utilisateurs au moyen d'au moins un formulaire de saisie de données, l'étape d'acquisition (4) comprenant la sous-étape de stockage (4a) de la deuxième série de données dans l'unité de traitement;
- fournir (5) un algorithme de partitionnement résidant dans l'unité de traitement ;
- profiler (6) les utilisateurs de l'échantillon d'utilisateurs au moyen de l'algorithme de partitionnement, l'étape de profilage (6) comprenant les sous-étapes suivantes :
- entraîner (61) l'algorithme de partitionnement sur la deuxième série de données pour chaque ensemble de données qualitatives de chaque utilisateur ;
- définir (62) un nombre optimal de clusters, chaque cluster étant lié à un type émotionnel différent ;
- classifier (63) au moyen de l'algorithme de partitionnement les utilisateurs de l'échantillon d'utilisateurs en attribuant chaque utilisateur à un cluster du nombre optimal de clusters sur la base de l'ensemble respectif de données qualitatives de la deuxième série de données ;
- fournir (7) un algorithme de classification résidant dans l'unité de traitement ;
- profiler (8) les utilisateurs de l'échantillon d'utilisateurs au moyen de l'algorithme de classification en classifiant chaque utilisateur dans un cluster du nombre optimal de clusters sur la base des indicateurs représentant l'ensemble respectif de données de la première série de données ;
- évaluer (9) l'algorithme de classification en fonction d'une comparaison entre le profilage de l'échantillon d'utilisateurs obtenu au moyen de l'algorithme de classification et le profilage de l'échantillon d'utilisateurs obtenu au moyen de l'algorithme de partitionnement, ladite étape d'évaluation (9) comprenant les sous-étapes consistant à valider (91) l'algorithme de classification lorsqu'il y a une compatibilité dans la comparaison desdits profilages, ou à répéter (92) les étapes consistant à fournir (7) un algorithme de classification, à fournir un algorithme de classification différent, à profiler (8) et à évaluer (9) l'algorithme de classification lorsqu'il n'y a pas de compatibilité dans la comparaison desdits profilages ;
- profiler (10) chaque utilisateur de la pluralité d'utilisateurs au moyen de l'algorithme de classification en attribuant chaque utilisateur à un cluster du nombre optimal de clusters, en fournissant en entrée à l'algorithme de classification les indicateurs représentant l'ensemble respectif de données de la première série de données, pour définir le type émotionnel de chaque utilisateur.

2. Procédé de profilage selon la revendication 1, dans lequel:
- la première série de données est liée au comportement bancaire de la pluralité d'utilisateurs et/ou à l'attitude de gestion de l'argent, chaque indicateur comprenant une variable dichotomique représentative d'un comportement bancaire particulier et/ou d'une préférence de dépense ; et
- la deuxième série de données comprend des données qualitatives relatives à un ou plusieurs parmi des préférences d'achat et/ou d'investissement, un style de vie financier, une source de revenu, une aptitude, une personnalité, des perspectives d'avenir, une auto-évaluation économique.

3. Procédé de profilage selon la revendication 1 ou 2, dans lequel :
- l'étape de fourniture (5) d'un algorithme de partitionnement comprend la sous-étape de fourniture d'une pluralité d'algorithmes de partitionnement ;
- l'étape de profilage (6) des utilisateurs de l'échantillon d'utilisateurs au moyen de l'algorithme de partitionnement comprend les sous-étapes consistant à :
- entraîner (601) chaque algorithme de partitionnement sur la deuxième série de données pour chaque ensemble de données qualitatives de chaqueutilisateur;
- définir (602) pour chaque algorithme de partitionnement un nombre optimal de clusters ;
- pour chaque algorithme de partitionnement, classifier (603) l'échantillon d'utilisateurs au moyen de l'algorithme de partitionnement respectif en attribuant chaque utilisateur de l'échantillon d'utilisateurs à un cluster du nombre optimal de clusters respectif sur la base de l'ensemble respectif de données qualitatives ;
- l'étape d'évaluation (9) comprend les sous-étapes consistant à :
- pour chaque algorithme de partitionnement, évaluer (901) l'algorithme de classification en fonction d'une comparaison entre le profilage de l'échantillon d'utilisateurs obtenu au moyen de l'algorithme de classification et le profilage de l'échantillon d'utilisateurs obtenu au moyen de l'algorithme de partitionnement respectif ;
- comparer (902) les algorithmes de partitionnement sur la base de la compatibilité envers lesdits profilages ;
- identifier (903) l'algorithme de partitionnement optimal en fonction de la plus grande compatibilité qui est ressortie de la comparaison effectuée à la sous-étape précédente.

4. Procédé de profilage selon l'une quelconque des revendications précédentes, dans lequel l'étape d'acquisition (4) d'une deuxième série de données comprend les sous-étapes consistant à :
- fournir (40) à chaque utilisateur de l'échantillon d'utilisateurs le formulaire de saisie de données, le formulaire de saisie de données pouvant être rempli par l'utilisateur ;
- recevoir (41) le formulaire de saisie de données rempli par chaque utilisateur de l'échantillon d'utilisateurs ;
- stocker (42) le formulaire de saisie de données dans l'unité de traitement, chaque formulaire de saisie de données comprenant des données définissant l'ensemble respectif de données qualitatives de la deuxième série de données, l'unité de traitement étant configurée pour analyser et traiter chaque ensemble de données qualitatives de la deuxième série de données.

5. Procédé de profilage selon l'une quelconque des revendications précédentes, comprenant les étapes supplémentaires consistant à :
- sélectionner (11) des utilisateurs appartenant à un ou plusieurs clusters du nombre optimal de clusters ;
- transmettre (12) des informations prédéfinies uniquement aux utilisateurs sélectionnés.

6. Procédé de profilage selon l'une quelconque des revendications précédentes, dans lequel l'étape de fourniture (1) d'une base de données comprend la sous-étape de sélection (101) d'un nombre optimal d'indicateurs parmi la pluralité d'indicateurs associés à la première série de données, le nombre optimal d'indicateurs étant compris entre 40 et 60, de préférence égal à 50.

7. Procédé de profilage selon l'une quelconque des revendications 1 à 6, dans lequel l'algorithme de partitionnement est du type non supervisé et/ou comprenant un parmi K-means, le partitionnement spectral et l'intégration stochastique de voisins t-distribuée, de préférence du type k-means.

8. Procédé de profilage selon l'une quelconque des revendications 1 à 7, dans lequel :
- la dimensionnalité de l'espace des clusters est définie par une dimension comprise entre 1 et 4, de préférence égale à 2 ; et/ou
- la distance relative à l'algorithme de partitionnement est du type cosinus ou euclidien, de préférence euclidien.

9. Procédé de profilage selon l'une quelconque des revendications précédentes, dans lequel l'algorithme de classification est du type supervisé et/ou comprenant un parmi les K plus proches voisins et la machine à vecteurs de support, de préférence les K plus proches voisins.

10. Procédé de profilage selon l'une quelconque des revendications précédentes, dans lequel le nombre optimal de clusters est compris entre 2 et 10, de préférence égal à 5.
